# EUROPEAN PATENT APPLICATION

(11) **EP 4 687 368 A1**
(43) Date of publication of application: **04.02.2026**
(21) Application number: 25192647.3
(22) Date of filing: 29.07.2025
(51) Int. Cl.: H04W 72/23, H04W 24/10

(54) **MEASUREMENT CONFIGURATION ADAPTATION**

(30) Priority: 30.07.2024 GB 202411140
(71) Applicant: Nokia Technologies Oy, 02610 Espoo (FI)
(72) Inventor: CAUDURO DIAS DE PAIVA, Rafael, 9200 Aalborg (DK); DIMNIK, Riikka Karoliina, 02880 Kirkkonummi (FI); RYSGAARD, Bent Henneberg, 9220 Aalborg (DK); TOFT, Morten, 9230 Svenstrup (DK); KAZEMI, Parham, 02610 Espoo (FI); DALSGAARD, Lars, 90230 Oulu (FI)
(74) Representative: Script Intellectual Property LLP

(57) **Abstract**

Example embodiments of the present disclosure are directed to measurement configuration adaptation. A method comprises receiving, from a second apparatus, a measurement configuration at least comprising a plurality of measurement timing occasions for measurements; performing, based on a state of the first apparatus being in a first region within a cell serving the first apparatus, the measurements by using some of the measurement timing occasions with a first periodicity; and monitoring, during a measurement timing occasion within which the first apparatus does not perform the measurements, scheduling information from the second apparatus; and transmitting, to the second apparatus, a response associated with a reception of a data transmission associated with the scheduling information.

## Description

### FIELD

Various example embodiments of the present disclosure generally relate to the field of telecommunication and in particular, to methods, devices, apparatuses and computer readable storage medium for measurement configuration adaptation.

### BACKGROUND

UE measurements are necessary in order to guarantee timely mobility decisions for ensuring robust mobility. The measurement information may be provided to the network in a timely manner so the network can make appropriate mobility decisions.

### SUMMARY

In a first aspect of the present disclosure, there is provided a first apparatus. The first apparatus comprises at least one processor; and at least one memory storing instructions that, when executed by the at least one processor, cause the first apparatus at least to: receive, from a second apparatus, a measurement configuration at least comprising a plurality of measurement timing occasions for measurements; perform, based on a state of the first apparatus being in a first region within a cell serving the first apparatus, the measurements by using some of the measurement timing occasions with a first periodicity; and monitor, during a measurement timing occasion within which the first apparatus does not perform the measurements, scheduling information from the second apparatus; and transmit, to the second apparatus, a response associated with a reception of a data transmission associated with the scheduling information.

In a second aspect of the present disclosure, there is provided a second apparatus. The second apparatus comprises at least one processor; and at least one memory storing instructions that, when executed by the at least one processor, cause the second apparatus at least to: configure, for a first apparatus, a measurement configuration at least comprising a plurality of measurement timing occasions for measurements; during a measurement timing occasion among the plurality of measurement timing occasions, transmit scheduling information to the first apparatus; and determine an availability of the first apparatus for a data transmission scheduling during the measurement timing occasion based on whether a response for a reception of data associated with the scheduling information is received from the first apparatus.

In a third aspect of the present disclosure, there is provided a method. The method comprises: receiving, by a first apparatus from a second apparatus, a measurement configuration at least comprising a plurality of measurement timing occasions for measurements; performing, based on a state of the first apparatus being in a first region within a cell serving the first apparatus, the measurements by using some of the measurement timing occasions with a first periodicity; and monitoring, during a measurement timing occasion within which the first apparatus does not perform the measurements, scheduling information from the second apparatus; and transmitting, to the second apparatus, a response associated with a reception of a data transmission associated with the scheduling information.

In a fourth aspect of the present disclosure, there is provided a method. The method comprises: configuring, by a second apparatus for a first apparatus, a measurement configuration at least comprising a plurality of measurement timing occasions for measurements; during a measurement timing occasion among the plurality of measurement timing occasions, transmitting scheduling information to the first apparatus; and determining an availability of the first apparatus for a data transmission scheduling during the measurement timing occasion based on whether a response for a reception of data associated with the scheduling information is received from the first apparatus.

In a fifth aspect of the present disclosure, there is provided a first apparatus. The first apparatus comprises means for receiving, from a second apparatus, a measurement configuration at least comprising a plurality of measurement timing occasions for measurements; means for performing, based on a state of the first apparatus being in a first region within a cell serving the first apparatus, the measurements by using some of the measurement timing occasions with a first periodicity; and means for monitoring, during a measurement timing occasion within which the first apparatus does not perform the measurements, scheduling information from the second apparatus; and means for transmitting, to the second apparatus, a response associated with a reception of a data transmission associated with the scheduling information.

In a sixth aspect of the present disclosure, there is provided a second apparatus. The second apparatus comprises means for configuring, for a first apparatus, a measurement configuration at least comprising a plurality of measurement timing occasions for measurements; means for, during a measurement timing occasion among the plurality of measurement timing occasions, transmitting scheduling information to the first apparatus; and means for determining an availability of the first apparatus for a data transmission scheduling during the measurement timing occasion based on whether a response for a reception of data associated with the scheduling information is received from the first apparatus.

In a seventh aspect of the present disclosure, there is provided a computer readable medium. The computer readable medium comprises instructions stored thereon for causing an apparatus to perform at least the method according to the third aspect.

In an eighth aspect of the present disclosure, there is provided a computer readable medium. The computer readable medium comprises instructions stored thereon for causing an apparatus to perform at least the method according to the fourth aspect.

It is to be understood that the Summary section is not intended to identify key or essential features of embodiments of the present disclosure, nor is it intended to be used to limit the scope of the present disclosure. Other features of the present disclosure will become easily comprehensible through the following description.

### BRIEF DESCRIPTION OF THE DRAWINGS

Some example embodiments will now be described with reference to the accompanying drawings, where:
FIG. 1 illustrates an example communication environment in which example embodiments of the present disclosure can be implemented;
FIGS. 2A and 2B illustrate synchronization signal block (SSB)-based measurement timing configuration (SMTC) patterns used for different cell regions according to some example embodiments of the present disclosure;
FIG. 3A illustrates a signaling chart for a communication in accordance with some example embodiments of the present disclosure;
FIG. 3B illustrates a signaling chart for a communication in accordance with some example embodiments of the present disclosure;
FIG. 4 illustrates a signaling chart for a communication in accordance with some example embodiments of the present disclosure;
FIG. 5 illustrates a signaling chart for a communication in accordance with some example embodiments of the present disclosure;
FIG. 6 illustrates a flowchart of a method implemented at a first apparatus in accordance with some example embodiments of the present disclosure;
FIG. 7 illustrates a flowchart of a method implemented at a second apparatus in accordance with some example embodiments of the present disclosure;
FIG. 8 illustrates a flowchart of a method implemented at a first apparatus in accordance with some example embodiments of the present disclosure;
FIG. 9 illustrates a flowchart of a method implemented at a second apparatus in accordance with some example embodiments of the present disclosure;
FIG. 10 illustrates a simplified block diagram of a device that is suitable for implementing example embodiments of the present disclosure; and
FIG. 11 illustrates a block diagram of an example computer readable medium in accordance with some example embodiments of the present disclosure.

Throughout the drawings, the same or similar reference numerals represent the same or similar element.

### DETAILED DESCRIPTION

Principle of the present disclosure will now be described with reference to some example embodiments. It is to be understood that these embodiments are described only for the purpose of illustration and help those skilled in the art to understand and implement the present disclosure, without suggesting any limitation as to the scope of the disclosure. Embodiments described herein can be implemented in various manners other than the ones described below.

In the following description and claims, unless defined otherwise, all technical and scientific terms used herein have the same meaning as commonly understood by one of ordinary skills in the art to which this disclosure belongs.

References in the present disclosure to "one embodiment," "an embodiment," "an example embodiment," and the like indicate that the embodiment described may include a particular feature, structure, or characteristic, but it is not necessary that every embodiment includes the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

It shall be understood that although the terms "first," "second,"..., etc. in front of noun(s) and the like may be used herein to describe various elements, these elements should not be limited by these terms. These terms are only used to distinguish one element from another and they do not limit the order of the noun(s). For example, a first element could be termed a second element, and similarly, a second element could be termed a first element, without departing from the scope of example embodiments. As used herein, the term "and/or" includes any and all combinations of one or more of the listed terms.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

As used herein, unless stated explicitly, performing a step "in response to A" does not indicate that the step is performed immediately after "A" occurs and one or more intervening steps may be included.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/ or combinations thereof.

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause a first apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

As used herein, the term "communication network" refers to a network following any suitable communication standards, such as New Radio (NR), Long Term Evolution (LTE), LTE-Advanced (LTE-A), Wideband Code Division Multiple Access (WCDMA), High-Speed Packet Access (HSPA), Narrow Band Internet of Things (NB-IoT) and so on. Furthermore, the communications between a terminal device and a network device in the communication network may be performed according to any suitable generation communication protocols, including, but not limited to, the first generation (1G), the second generation (2G), 2.5G, 2.75G, the third generation (3G), the fourth generation (4G), 4.5G, the fifth generation (5G), 5.5G, the sixth generation (6G) communication protocols, and/or any other protocols either currently known or to be developed in the future. Embodiments of the present disclosure may be applied in various communication systems. Given the rapid development in communications, there will of course also be future type communication technologies and systems with which the present disclosure may be embodied. It should not be seen as limiting the scope of the present disclosure to only the aforementioned system.

As used herein, the term "network device" refers to a node in a communication network via which a terminal device accesses the network and receives services therefrom. The network device may refer to a base station (BS) or an access point (AP), for example, a node B (NodeB or NB), an evolved NodeB (eNodeB or eNB), an NR NB (also referred to as a gNB), a Remote Radio Unit (RRU), a radio header (RH), a remote radio head (RRH), a relay, an Integrated Access and Backhaul (IAB) node, a low power node such as a femto, a pico, a non-terrestrial network (NTN) or non-ground network device such as a satellite network device, a low earth orbit (LEO) satellite and a geosynchronous earth orbit (GEO) satellite, an aircraft network device, and so forth, depending on the applied terminology and technology. In some example embodiments, radio access network (RAN) split architecture comprises a Centralized Unit (CU) and a Distributed Unit (DU) at an IAB donor node. An IAB node comprises a Mobile Terminal (IAB-MT) part that behaves like a UE toward the parent node, and a DU part of an IAB node behaves like a base station toward the next-hop IAB node.

The term "terminal device" refers to any end device that may be capable of wireless communication. By way of example rather than limitation, a terminal device may also be referred to as a communication device, user equipment (UE), a Subscriber Station (SS), a Portable Subscriber Station, a Mobile Station (MS), or an Access Terminal (AT). The terminal device may include, but not limited to, a mobile phone, a cellular phone, a smart phone, voice over IP (VoIP) phones, wireless local loop phones, a tablet, a wearable terminal device, a personal digital assistant (PDA), portable computers, desktop computer, image capture terminal devices such as digital cameras, gaming terminal devices, music storage and playback appliances, vehicle-mounted wireless terminal devices, wireless endpoints, mobile stations, laptop-embedded equipment (LEE), laptop-mounted equipment (LME), USB dongles, smart devices, wireless customer-premises equipment (CPE), an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. The terminal device may also correspond to a Mobile Termination (MT) part of an IAB node (e.g., a relay node). In the following description, the terms "terminal device", "communication device", "terminal", "user equipment" and "UE" may be used interchangeably.

As used herein, the term "resource," "transmission resource," "resource block," "physical resource block" (PRB), "uplink resource," or "downlink resource" may refer to any resource for performing a communication, for example, a communication between a terminal device and a network device, such as a resource in time domain, a resource in frequency domain, a resource in space domain, a resource in code domain, or any other combination of the time, frequency, space and/or code domain resource enabling a communication, and the like. In the following, unless explicitly stated, a resource in both frequency domain and time domain will be used as an example of a transmission resource for describing some example embodiments of the present disclosure. It is noted that example embodiments of the present disclosure are equally applicable to other resources in other domains.

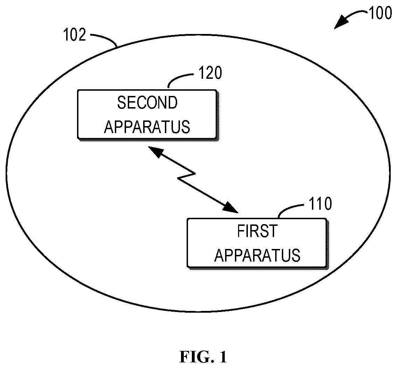

FIG. 1 illustrates an example communication environment 100 in which example embodiments of the present disclosure can be implemented. As shown in FIG. 1, the communication network 100 may comprise a first apparatus 110 which may be, for example, a terminal device. In some example embodiments, the terminal device may also be discussed as a UE.

The communication network 100 may further comprise a second apparatus 120, which may be, for example, a network device. In some example embodiments, the network device may be discussed as a BS, a gNB, or an eNB.

A serving area provided by the first apparatus 110 is called a cell. The second apparatus 120 may communicate with the first apparatus 110 within the cell 102. The cell currently serving the second apparatus 120 may be considered as a serving cell 102.

In the following, for the purpose of illustration, some example embodiments are described with the first apparatus 110 operating as a terminal device and the second apparatus 120 operating as a network device. However, in some example embodiments, operations described in connection with a terminal device may be implemented at a network device or other device, and operations described in connection with a network device may be implemented at a terminal device or other device.

In some example embodiments, if the first apparatus 110 is a terminal device and second apparatus 120 is a network device, a link from the second apparatus 120 to first apparatus 110 is referred to as a downlink (DL), while a link from the first apparatus 110 to second apparatus 120 is referred to as an uplink (UL). In DL, the second apparatus 120 is a transmitting (TX) apparatus (or a transmitter) and the first apparatus 110 is a receiving (RX) apparatus (or a receiver). In UL, the first apparatus 110 is a TX apparatus (or a transmitter) and the second apparatus 120 is a RX apparatus (or a receiver).

It is to be understood that the number of network devices and terminal devices shown in FIG. 1 is given for the purpose of illustration without suggesting any limitations. The communication environment 100 may include any suitable number of network devices and terminal devices.

Communications in the communication environment 100 may be implemented according to any proper communication protocol(s), comprising, but not limited to, cellular communication protocols of the first generation (1G), the second generation (2G), the third generation (3G), the fourth generation (4G), the fifth generation (5G), the sixth generation (6G), and the like, wireless local network communication protocols such as Institute for Electrical and Electronics Engineers (IEEE) 802.11 and the like, and/or any other protocols currently known or to be developed in the future. Moreover, the communication may utilize any proper wireless communication technology, comprising but not limited to: Code Division Multiple Access (CDMA), Frequency Division Multiple Access (FDMA), Time Division Multiple Access (TDMA), Frequency Division Duplex (FDD), Time Division Duplex (TDD), Multiple-Input Multiple-Output (MIMO), Orthogonal Frequency Division Multiple (OFDM), Discrete Fourier Transform spread OFDM (DFT-s-OFDM) and/or any other technologies currently known or to be developed in the future.

One of the main objectives of a RAN 4 work item (WI) is aimed at studying how to reduce the Layer 3 (L3) SSB-based L3 measurement delay for a UE not configured with Carrier Aggregation (CA) or Dual Connectivity (DC). Hence, a UE is assumed operating in a single carrier mode (1 serving cell). Under these assumptions, the aim is to identify conditions when it can be assumed that a UE can be expected to perform L3 measurements with more than the currently assumed 1 Rx chain.

Network operators can influence the UE measurement periodicities depending on the UE connection need. This can be done by controlling the number of carriers the UE is configured to measure as well as the setting for each configured carrier. This flexibility helps optimize UE and network performance, improve user experience, and efficiently manage radio resources in varying deployment scenarios.

The UE, in turn can also evaluate the measurement results and assess whether and how many measurements the UE may or may not perform while still ensuring that the UE fulfills the requirements.

As part of the discussion in radio resource management (RRM), the scenarios for enabling -or when UE is assumed to use- more than 1 Rx chain for performing L3 measurements (also referred to as fast beam sweeping (FBS)) have been discussed. For the measurement delay reduction, it is identified by some companies that the benefits of FBS are more relevant in cell edge conditions, when the UE is closer to the handover region. On the other hand, some other companies would also like to use FBS in order to reduce scheduling restrictions, and thereby improving the UE throughput. Other scenarios have also been mentioned.

UE measurements are necessary in order to guarantee timely mobility decisions for ensuring robust mobility. However, there is a certain balance between amount of measurements the UE is requested to perform and the delay with which the results can be reported to the network.

On one hand, increasing the amount of time that the UE is measuring can provide the network with timely and up to date measurement information to facilitate possible mobility decisions faster, avoiding errors due to slow decisions.

On the other hand, configuring the UE to perform a large amount of measurements also come with the cost of larger overhead and increased delay. This overhead might be due to measurement gaps (i.e., time intervals configured by the network enabling the UE to perform measurements and hence, where the UE is not expected to transmit or receive data) or scheduling restrictions (i.e. restrictions around symbols to be measured).

Having continuous or frequent measurements performed by the UE may have positive impact on the mobility robustness and service quality. However, measurements also cost in terms of UE power consumption. Hence, measurements are beneficial but should be balanced.

For the scenario where the UE is operating in single carrier mode (not configured with CA or DC), there is also an aspect of L3 measurement delay and how to reduce the measurement delay. As mentioned, the current requirements only require the UE to measure using a single Rx chain in Frequency Range 2 (FR2). It is common understanding that in FR2, beam forming is needed in order to maintain a reasonable link budget. Hence, both UE and network are likely to use beam forming (in both transmission and reception). On UE side -and for the discussion of UE measurements- using Rx beam forming basically reduces the UE spatial coverage and hence there is a need for the UE to sweep among different Rx beams to cover the full sphere.

This of course increases the UE measurement time and hence, reducing this beam sweeping delay by using multiple Rx beams on UE side simultaneously is a way to reduce the measurements. However, this increases (potentially) the UE power consumption.

Therefore, it is to be discussed that how to reduce the L3 measurement delay and in which the conditions the UE is allowed to reduce the L3 measurement delay. For example, some conditions associated with a region state of UE (in other words, what region of a cell a UE is in) may be considered.

The present disclosure proposes a solution of synchronization signal block (SSB)-based measurement timing configuration (SMTC) adaptation. In this solution, the first apparatus 110 may receive, from the second apparatus 120, a measurement configuration at least comprising a plurality of measurement timing configurations corresponding to different region states of the first apparatus within a cell serving the first apparatus and at least one condition for triggering a measurement report. The first apparatus 110 may perform at least one measurement based on a first measurement timing configuration in the plurality of measurement timing configurations corresponding a first region state of the first apparatus within the cell. If the first apparatus 110 determines, based on the at least one measurement, that at least one condition is satisfied, the first apparatus 110 may trigger a transmission of the measurement report to the second apparatus while starting using a second measurement timing configuration in the plurality of measurement timing configurations corresponding to a second region state of the first apparatus instead of the first measurement timing configuration.

Embodiments of the present disclosure proposes a solution for measurement adaptation of measurement configuration based on cell conditions is proposed. The periodicity and/or offset in which the UE perform measurements may depend on the serving cell conditions.

When serving cell conditions change, and a measurement report is triggered by the UE. Based on having sent the event triggered measurement report to the network the UE will change the measurement configuration. Similarly, the network will assume that the UE changes the measurement configuration.

As shown in FIG. 1, the first apparatus 110 is at a location within the cell 102 and served by a cell 102. The cell 102 may be considered as a serving cell of the first apparatus 110. The radio condition of the first apparatus 110 may be associated with a location of the first apparatus 110 of the cell, i.e., in which region the first apparatus 110 is located.

In some embodiments of the present disclosure and the discussion hereinafter, two regions in the cell may be considered, e.g., the cell center and the cell edge. It is to be understood that the solution of the present disclosure may also be suitable for the other regions between the cell center and cell edge. Different regions in the cell may cause different radio conditions.

For example, if the UE is in conditions that correspond to a cell center (i.e. "good radio conditions"), the UE uses a measurement configuration with increased measurement periodicity (e.g. SMTC periodicity), giving more scheduling opportunities. If the UE is in conditions that correspond to cell edge (i.e. "bad radio conditions"), a measurement configuration is used where the periodicity of the measurement is decreased. This results in smaller measurement delay.

In both cases the network is aware of the measurement configuration that is used through measurement reports sent by the UE to the network. After a measurement report, the UE and network know which configuration is used based on the conditions.

This solution assumes the UE is using multi-Rx while it enables having reduced measurement delay at cell edge, while mitigating the increased UE power consumption due to use of multi-Rx on the UE side by increasing the SMTC periodicity when the UE is not at cell edge.

In addition, the adaptation of the measurement delay periodicity may be enabled only if the fast beam sweeping due to the multi-Rx is enabled.

The device and the network may both know the measurement scheduling by the event-based measurements triggering measurement reports. The network may then adapt scheduling restrictions accordingly.

In some other embodiments of the present disclosure, the UE may adapt the SMTC configuration autonomously. In this case, the UE may be configured with a SMTC periodicity of T_SMTC and the UE is capable of performing fast beam sweeping (e.g., using multi-Rx), but it may not be configured by the network or activated to use fast beam sweeping. If the UE detects that it is in cell center, it may use the fast beam sweeping to measure less SMTC occasions comparing to the ones configured by T_SMTC. If the UE detects that it is in the cell edge, the UE may monitor all the SMTC occasions.

The measurement configuration (including one or more parameters) may be adapted based on detection that the UE is in a radio condition 1, or a radio condition 2. In one some example embodiments, the radio condition 1 is equivalent to cell edge or bad radio conditions, whereas the radio condition 2 is equivalent to cell center or good radio conditions. It is to be understood that the term "cell edge" and "cell center" used hereinafter may be used to describe "the condition 1" and "the condition 2".

The detection of the radio condition by the UE may be performed based on at least one options in the following:
- Option 1 - mobility events
- Option 2 - an RSRP threshold
- Option 3 - any location information that is known to the UE and/or the network
- Option 4 - UE mobility status
- Option 5 - status of the data buffer on the UE or the network side

The detection of UE region status may be based on conditions that are experienced on the UE side and/or network side. Signaling exchange about the experienced region and the applicable measurement configuration may also be introduced. For example, in Option 4, the UE may inform the network that it is in high mobility and will hence use the "cell edge" measurement configuration. The network may acknowledge this. In Option 5, the UE or network may prefer either cell center or cell edge configuration depending on the status of the data buffer.

The coverage of a cell (e.g., the cell 102 as shown in FIG. 1) may be divided in different regions. It is to be understood that, in addition to the "cell center" and "cell edge", more than two regions can be defined. The region "cell center" may also be referred to as a region near the cell center and the region "cell edge" may also be referred to as a region far from the region "cell center". It is to be understood that a region referring to a location between the "cell center" and the "cell edge" may also be defined.

For different regions, different measurement delay configurations may be configured. Alternatively, the measurement delay requirements may be different but by applying multi-Rx on UE side, the amount of measurement occasions needed by the UE may be reduced and hence, SMTC may be increased.

If there may be more than two regions defined, for each of the regions, there is a corresponding configuration of detection parameters for crossing region boundaries.

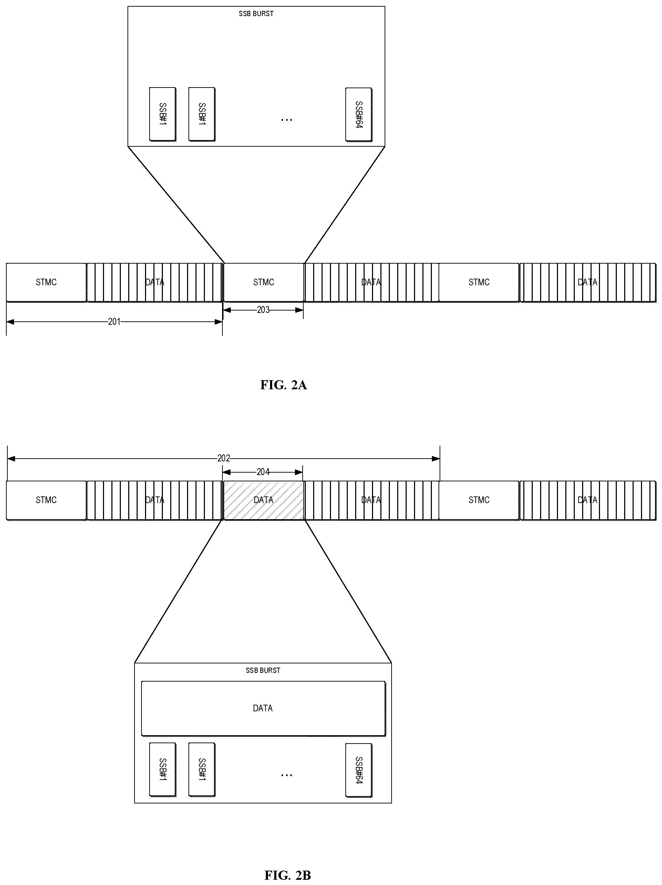

If the cell coverage is divided into two regions, e.g., a region "cell center" and a region "cell edge", measurement configurations for the two regions may be shown with reference to FIG. 2A and 2B.

A second SMTC periodicity 201 for a second region of cell, i.e., the cell edge SMTC periodicity (as shown in FIG. 2A) may be 2 times smaller than a first SMTC periodicity 202 for a first region of cell, i.e., the cell center SMTC periodicity. With this configuration a small measurement delay is expected for the cell edge, but this implies in larger measurement overhead, as all SMTCs will be impacted either by measurement gaps, or scheduling restrictions.

For the cell center configuration, the SMTC periodicity is increased, and allow for data transmission (e.g., during the interval 204 shown in FIG. 2B) in some of the SMTC occasions that are used for measurements in the cell edge SMTC periodicity (e.g., the SMTC occasion 203 shown in FIG. 2A). Those occasions marked with data may use some PRBs for the SSB burst, whereas other PRBs are used for data.

It is also possible that more than one of the options 1-5 can be used as the criteria to define whether to use cell edge or cell center measurement configuration. For example, mobility events (Option 1) may be prioritized over the data buffer status.

Example embodiments of the present disclosure will be described in detail below with reference to the accompanying drawings.

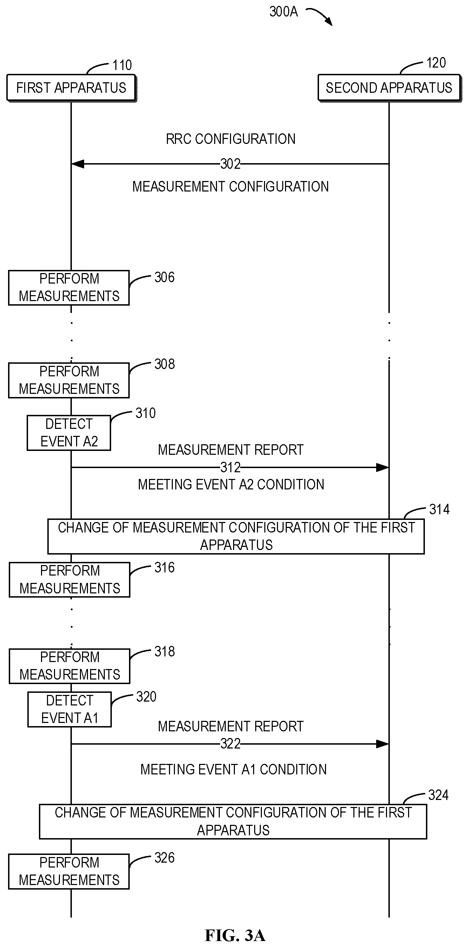

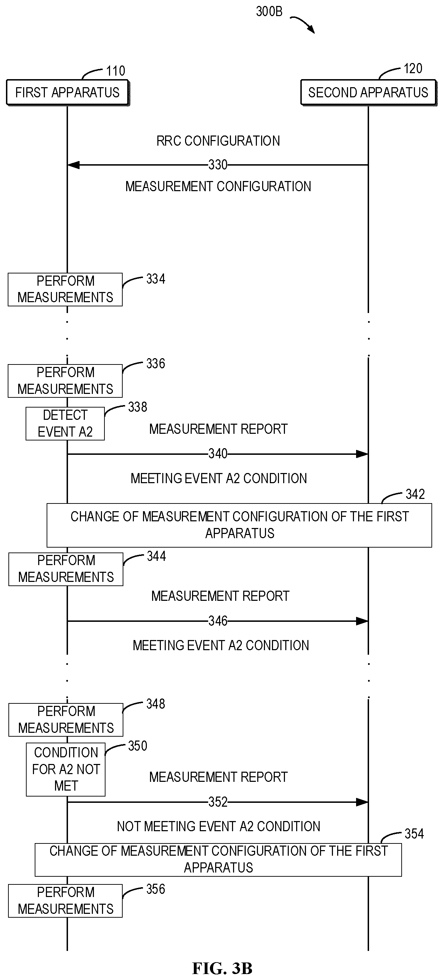

Reference is now made to FIGS. 3A and 3B, which show signaling charts 300A and 300B for communication according to some example embodiments of the present disclosure. As shown in FIGS. 3A and 3B, the signaling charts 300A and 300B involve a first apparatus 110 and a second apparatus 120. For the purpose of discussion, reference is made to FIG. 1 to describe the signaling charts 300A and 300B. In some embodiments, the first apparatus 110 comprises a terminal device, e.g., a UE and the second apparatus 120 comprises a network device, e.g., a gNB.

FIGS. 3A and 3B show two examples of proposed solution of a scenario for configuring different measurement configurations corresponding to cell edge region and cell center regions. Some steps performed in the signaling chart 300A are similar to some steps performed in the signaling chart 300B.

As shown in FIG. 3A, the second apparatus 120 may send (302), to the first apparatus 110, a measurement configuration at least comprising a plurality of measurement timing configurations corresponding to different region states (e.g., the cell center state and the cell edge state) of the first apparatus 110 within a cell serving the first apparatus 110 and at least one condition for triggering a measurement report.

In some embodiments, the second apparatus 120 may send measurement configuration via a radio resource control (RRC) configuration message to the first apparatus 110. The measurement configuration may comprise a plurality of measurement timing configurations such as a first measurement timing configuration, e.g., a cell center configuration and a second measurement timing configuration e.g., a cell edge configuration with corresponding SMTC settings, and one or more cell adaptation configuration detailing conditions.

Different measurement timing configuration may be associated with different periodicities. For example, a first periodicity associated with the first measurement timing configuration is larger than a second periodicity associated with the second measurement timing configuration if the first region state of the first apparatus is nearer to a center of the cell comparing to the second region state, because the performance of the connection is usually better when the terminal device is closer to the center of the cell.

As described above, the different region states may refer to a cell center state indicating that the first apparatus 110 is located at the center of the cell 102 and a cell edge state indicating that the first apparatus 110 is located at the edge of the cell 102 etc. The first measurement timing configuration may be configured for a case where the first apparatus 110 is located at the center of the cell 102 and the second measurement timing configuration may be configured for a case where the first apparatus 110 is located at the edge of the cell 102.

Additionally or alternatively, the measurement configuration may comprises offsets corresponding to the plurality of measurement timing configurations. For example, in one alternative embodiment, the different measurement configurations (i.e., measurement timing configurations) may include measurement gap settings (i.e., offsets) with gap Offset for a SMTC configuration, Measurement Gap Repetition Period (MGRP) and/or simply a gap between each measurement.

In some embodiments, the cell adaptation configuration detailing conditions may be associated with a detection of one or more events and/or information in association with at least one of the following: a mobility event, a RSRP threshold, location information that is known to the first apparatus 110 and/or the second apparatus 120, the mobility status of the first apparatus 110, or status of data buffer on the first apparatus 110 or the second apparatus 120.

In some other embodiments, the at least one condition is associated with one or more region states of the first apparatus 110 within the cell (i.e. serving cell 102). For example, the conditions may comprise a cell center condition corresponding to event A2 and a cell edge condition corresponding to event A1. For example, event A1 may represent service becomes better than threshold and event A2 may represent service becomes worse than threshold.

In some cases, mobility events A2 and A1 may be used for event triggered measurement reports, which will be described with reference to FIG. 3A. In some other cases, a single event, e.g., the event A2 may be used for event triggered periodic measurement reports, which may be described with reference to FIG. 3B later.

Both the first apparatus 110 and the second apparatus 120 may assume that the first apparatus 110 is in an initial region state currently, e.g., in a region state associated with the cell center. Therefore, the first measurement timing configuration, e.g., a cell center configuration may be used by the first apparatus 110 to perform the measurements.

In some other embodiments, the initial region state may be a region state associated with the cell edge.

For example, the initial region state may be a default region state which may be defined in specifications. It is also possible that the initial region state may be configured by the second apparatus 120 and/or provided by the second apparatus 120 via the measurement configuration.

In a case where the first apparatus 110 is in the first region state, the first apparatus 110 may perform (306 and 308) measurements based on a first measurement timing configuration in the plurality of measurement timing configurations corresponding a first region state of the first apparatus 110 within the cell. In some embodiments, the first apparatus 110 may perform the necessary measurements as scheduled in the measurement configuration. The measurements may be periodically repeated.

During the measurements performed by the first apparatus 110, if the first apparatus 110 determines/detects (310) that at least one condition is satisfied based on the at least one measurement, the first apparatus 110 may trigger (312) a transmission of the measurement report to the second apparatus 120 while starting to use a second measurement timing configuration in the plurality of measurement timing configurations corresponding to a second region state of the first apparatus 110 instead of the first measurement timing configuration.

For example, if the first apparatus 110 detects the event A2, i.e., a condition specified under the cell edge configuration in the adaptation settings, based on the at least one measurement, the first apparatus 110 may determine serving becomes worse than threshold, e.g., due to the mobility of the first apparatus 110. Then the first apparatus 110 may determine that second measurement timing configuration corresponding to a second region state of the first apparatus 110 is to be used.

Upon a detection of event A2, the measurement report, transmitted from the first apparatus 110 to the second apparatus 120, may indicate that the conditions for event A2 have been met. After that, both the first apparatus 110 and the second apparatus 120 (upon a reception of the measurement report) may be aware that the first apparatus 110 is meeting the cell edge condition.

Then both the first apparatus 110 and the second apparatus 120 may change (314) the measurement configuration of the first apparatus 110 to the second measurement timing configuration (e.g., the cell edge configuration).

Then, the first apparatus 110 continues to perform (316 till 318) measurements under the second cell edge configuration, and the measurement is periodically repeated.

If the first apparatus 110 detects (320) a further event based on at least one further measurement, the first apparatus 110 may determine a second condition in the two or more conditions is satisfied. Then the first apparatus 110 may determine that the first measurement timing configuration corresponding to the first region state of the first apparatus.

For example, if the first apparatus 110 detects the event A1 (i.e. further event), the first apparatus 110 may determine that a condition specified under the cell center configuration in the adaptation settings is met and the first measurement timing configuration corresponding to the first region state of the first apparatus is to be used.

It is to be understood that if further measurement timing configurations are configured for other region states other than the cell center region state and the cell edge region state, the first apparatus 110 may also determine other measurement timing configuration (e.g., a third measurement timing configuration corresponding to a third region state of the first apparatus) is to be used upon a change of region state.

The first apparatus 110 may send (322) a measurement report to the second apparatus 120. For example, upon a detection of event A1, the measurement report, transmitted from the first apparatus 110 to the second apparatus 120, may indicate that the conditions for event A1 have been met. After that, both the first apparatus 110 and the second apparatus 120 (upon a reception of the measurement report) may be aware that the first apparatus 110 is meeting the cell center condition.

Then both the first apparatus 110 and the second apparatus 120 may change (324) the measurement configuration of the first apparatus 110 to the first measurement timing configuration (e.g., the cell center configuration).

After the change of configuration, the first apparatus 110 continues to perform (326) measurements under the reverted-to cell center configuration. The measurements are periodically repeated.

The reference is now made to FIG. 3B, which shows a scenario where a single event, e.g., the event A2 may be used for event triggered periodic measurement reports.

As shown in FIG. 3B, the second apparatus 120 may send (330), to the first apparatus 110, a measurement configuration at least comprising a plurality of measurement timing configurations corresponding to different region states (e.g., the cell center state and the cell edge state) of the first apparatus 110 within a cell serving the first apparatus 110 and at least one condition for triggering a measurement report.

In some embodiments, the second apparatus 120 may send measurement configuration via a radio resource control (RRC) configuration message to the first apparatus 110. The measurement configuration may comprise a plurality of measurement timing configurations such as a first measurement timing configuration, e.g., a cell center configuration and a second measurement timing configuration e.g., a cell edge configuration with corresponding SMTC settings, and one or more cell adaptation configuration detailing conditions.

Different measurement timing configuration may be associated with different periodicities. For example, a first periodicity associated with the first measurement timing configuration is larger than a second periodicity associated with the second measurement timing configuration if the first region state of the first apparatus is nearer to a center of the cell comparing to the second region state, because the performance of the connection is usually better when the terminal device is closer to the center of the cell.

As described above, the different region states may refer to a cell center state indicating that the first apparatus 110 is located at the center of the cell 102 and a cell edge state indicating that the first apparatus 110 is located at the edge of the cell 102 etc. The first measurement timing configuration may be configured for a case where the first apparatus 110 is located at the center of the cell 102 and the second measurement timing configuration may be configured for a case where the first apparatus 110 is located at the edge of the cell 102.

Additionally or alternatively, the measurement configuration may comprise offsets corresponding to the plurality of measurement timing configurations. For example, in one alternative embodiment, the different measurement configurations (i.e., measurement timing configurations) may include measurement gap settings (i.e., offsets) with gap Offset for a SMTC configuration, Measurement Gap Repetition Period (MGRP) and/or simply a gap between each measurement.

In some embodiments, the cell adaptation configuration detailing condition may be associated with a detection of one or more events and/or information in association with at least one of the following: a mobility event, a RSRP threshold, location information that is known to the first apparatus 110 and/or the second apparatus 120, the mobility status of the first apparatus 110, or status of data buffer on the first apparatus 110 or the second apparatus 120.

In the scenario of FIG. 3B, the cell adaptation configuration detailing condition may comprise a cell center condition corresponding to event A2. For example, event A2 may represent serving becomes worse than threshold. In this case, the event A2 may be used for event triggered periodic measurement reports, which may be described with reference to FIG. 3B later.

Both the first apparatus 110 and the second apparatus 120 may assume that the first apparatus 110 is in an initial region state currently, e.g., in a region state associated with the cell center. Therefore, the first measurement timing configuration, e.g., a cell center configuration may be used by the first apparatus 110 to perform the measurements.

In some other embodiments, the initial region state may be a region state associated with the cell edge.

For example, the initial region state may be a default region state which may be defined in specifications. It is also possible that the initial region state may be configured by the second apparatus 120 and/or provided by the second apparatus 120 via the measurement configuration.

In a case where the first apparatus 110 is in the first region state, the first apparatus 110 may perform (334 and 336) measurements based on a first measurement timing configuration in the plurality of measurement timing configurations corresponding a first region state of the first apparatus 110 within the cell. In some embodiments, the first apparatus 110 may perform the necessary measurements as scheduled in the measurement configuration. The measurements may be periodically repeated.

During the measurements performed by the first apparatus 110, if the first apparatus 110 determines/detects (310) that at least one condition is satisfied based on the at least one measurement, the first apparatus 110 may trigger (340) a transmission of the measurement report to the second apparatus 120 while starting to use a second measurement timing configuration in the plurality of measurement timing configurations corresponding to a second region state of the first apparatus 110 instead of the first measurement timing configuration.

For example, if the first apparatus 110 detects the event A2, i.e., a condition specified under the cell edge configuration in the adaptation settings, based on the at least one measurement, the first apparatus 110 may determine service becomes worse than threshold, e.g., due to the mobility of the first apparatus 110. Then the first apparatus 110 may determine that second measurement timing configuration corresponding to a second region state of the first apparatus 110 is to be used.

Upon a detection of event A2, the measurement report, transmitted from the first apparatus 110 to the second apparatus 120, may indicate that the conditions for event A2 have been met. After that, both the first apparatus 110 and the second apparatus 120 (upon a reception of the measurement report) may be aware that the first apparatus 110 is meeting the cell edge condition.

Then both the first apparatus 110 and the second apparatus 120 may change (342) the measurement configuration of the first apparatus 110 to the second measurement timing configuration (e.g., the cell edge configuration).

Then, the first apparatus 110 continues to perform (344 and 348) measurements under the second cell edge configuration, and the measurement is periodically repeated. For event triggered periodic measurement report, the first apparatus 110 may keep on sending (346) reports while the condition to event A2 is still being met. Once the conditions for event A2 are not met, in the next reporting occasion the first apparatus 110 may indicate that the condition for event A2 is not met.

If the first apparatus 110 detects (350) event A2 is not met, then the first apparatus 110 may determine that the first measurement timing configuration (e.g., cell center measurement timing configuration) corresponding to the first region state (e.g., cell center region state) of the first apparatus.

The first apparatus 110 may send (352) a measurement report to the second apparatus 120. For example, the measurement report, transmitted from the first apparatus 110 to the second apparatus 120, may indicate that the condition for event A2 is not met. After that, both the first apparatus 110 and the second apparatus 120 (upon a reception of the measurement report) may be aware that the first apparatus 110 is meeting the cell center condition.

Then both the first apparatus 110 and the second apparatus 120 may change (354) the measurement configuration of the first apparatus 110 to the first measurement timing configuration (e.g., the cell center configuration).

After the change of configuration, the first apparatus 110 continues to perform (356) measurements under the reverted cell center configuration. The measurements are periodically repeated.

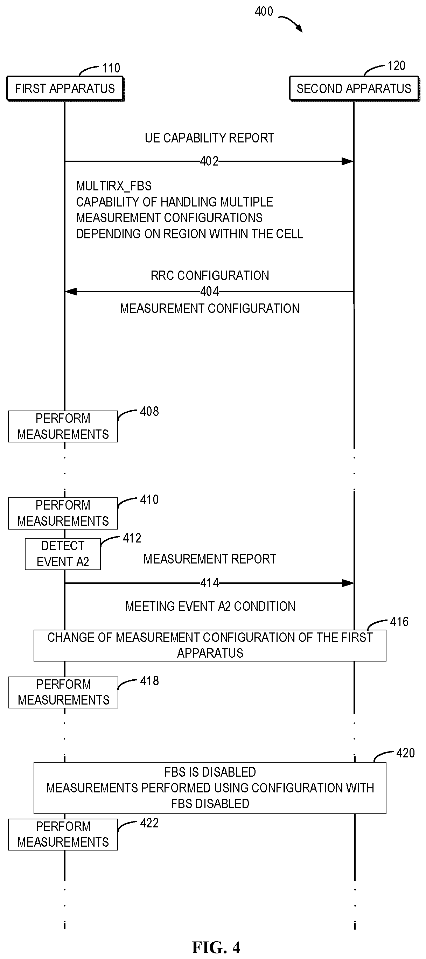

Reference is now made to FIG. 4, which shows a signaling chart 400 for communication according to some example embodiments of the present disclosure. As shown in FIG. 4 the signaling chart 400 involves a first apparatus 110 and a second apparatus 120. For the purpose of discussion, reference is made to FIG. 1 to describe the signaling chart 400. In some embodiments, the first apparatus 110 comprises a terminal device and the second apparatus 120 comprises a network device.

As shown in FIG. 4, a first apparatus 110 with Multi-RX fast beam sweeping capability is considered in combination with the SMTC adaptation.

In some embodiments, the first apparatus 110 may send (402) a capability report indicating that the first apparatus 110 is capable of performing a FBS operation.

In some embodiments, the first apparatus 110 may indicate its capability of Multi-Rx FBS to the network (i.e. the second apparatus 120). The first apparatus 110 may also indicate whether it is able to handle multiple measurement configurations depending on the region within the cell 102.

Then the first apparatus 110 may obtain an indication of whether a FBS is enabled corresponding to the plurality of measurement timing configurations.

In some embodiments, the second apparatus 120 may send (404) a measurement configuration carried in a RRC configuration message to the first apparatus 110. In addition to the parameters/information included in the measurement configuration which has been described with reference to FIGS 3A and 3B, the measurement configuration may also comprise measurement configuration for when FBS is enabled/disabled.

In some example embodiments, there are 4 measurement configurations: configuration 1: cell center without FBS; configuration 2: cell center with FBS; configuration 3: cell edge without FBS; and configuration 4: cell edge with FBS.

At the start of the measurement, the first apparatus 110 and the second apparatus 120 may assume the initial region state based on the first measurement timing configuration (e.g., cell center measurement timing configuration) with FBS enabled. The definition of the initial region state has been described with reference to FIGS 3A and 3B, which may be omitted here.

In some embodiments, the first apparatus 110 may perform (408 till 410) measurements based on the measurement configuration. In particular, the first apparatus 110 may perform the necessary measurements as scheduled in the measurement configuration. The measurements are periodically repeated.

In the first scenario where FBS is enabled and there is only one condition which corresponds to the event A2 for the first apparatus 110, if the first apparatus 110 detects (412) an event based on the at least one measurement, the first apparatus 110 may determine the condition is satisfied. Then the first apparatus 110 may determine, based on the satisfying of the condition, that the second measurement timing configuration (e.g., cell edge measurement timing configuration) corresponding to the second region state (e.g., cell edge state) of the first apparatus 110 is to be used by the first apparatus 110 instead of the first measurement timing configuration.

Then the first apparatus 110 may send (414) a measurement report to the second apparatus 120 indicating that the conditions for event A2 have been met. Following the detection of event A2, the second apparatus 120 may implicitly change (416) the measurement configuration of the first apparatus 110 to the cell edge configuration.

In some embodiments, the first apparatus 110 may continue to perform (418) measurements under the second cell edge configuration. The measurements are periodically repeated.

The FBS may be disabled during the measurement process when using the second measurement timing configuration.

If the FBS is disabled during the process, the first apparatus 110 and the second apparatus 120 may perform (420) the measurements are using the configuration without FBS. Then the first apparatus 110 may continue to perform (422) measurements under the reverted cell center configuration (with FBS disabled). The measurements are periodically repeated.

Although not shown, it is also possible that in a case where FBS is enabled and there are two conditions which respectively corresponds to the event A1 and the event A2 for the first apparatus 110, if the first apparatus 110 determines that FBS is enabled and that an event (e.g., event A2) is detected based on the at least one measurement, the first apparatus 110 may determine a first condition (e.g., event A2 is met) is satisfied. Then the first apparatus 110 may determine, based on the satisfying of the first condition, that the second measurement timing configuration corresponding to the second region state of the first apparatus 110 is to be used by the first apparatus 110 instead of the first measurement timing configuration.

If the first apparatus 110 determines that FBS is enabled and that a further event (e.g., event A1) is detected based on at least one further measurement, the first apparatus 110 may determine a second condition (e.g., event A1 is met) is satisfied. Then the first apparatus 110 may determine, based on the satisfying of the second condition, that the first measurement timing configuration corresponding to the first region state of the first apparatus 110 or a third measurement timing configuration corresponding to a third region state of the first apparatus 110 is to be used by the first apparatus 110 instead of the second measurement timing configuration.

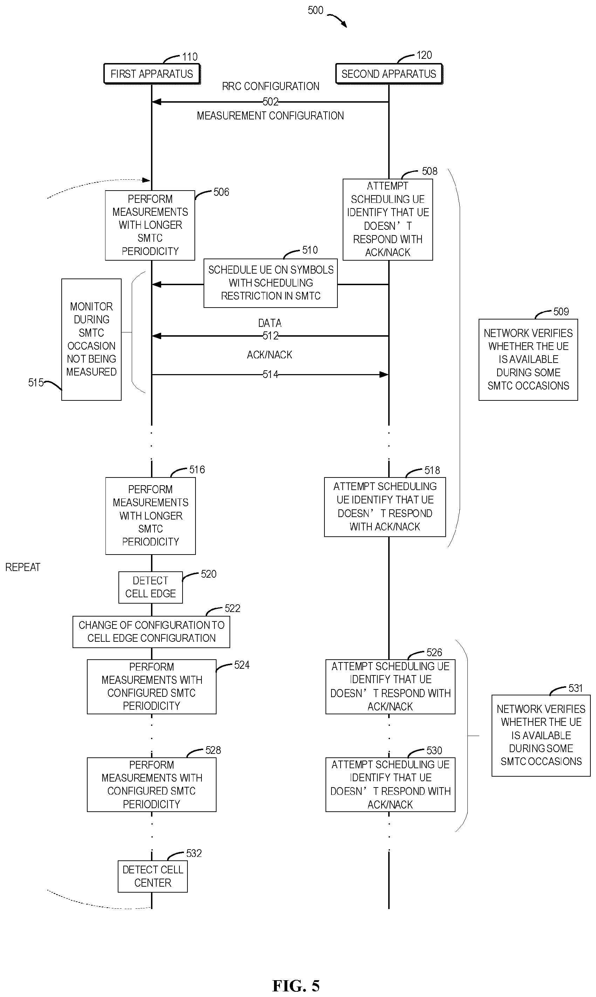

Reference is now made to FIG. 5, which shows a signaling chart 500 for communication according to some example embodiments of the present disclosure. As shown in FIG. 5, the signaling chart 500 involves a first apparatus 110 and a second apparatus 120. For the purpose of discussion, reference is made to FIG. 1 to describe the signaling chart 500. In some embodiments, the first apparatus 110 comprises a terminal device and the second apparatus 120 comprises a network device.

The signaling chart 500 shows a UE (e.g., the first apparatus 110) performing SMTC adaptation based on the measurements. The second apparatus 120 may try to schedule the first apparatus 110 during the configured SMTC occasion(s).

In some embodiments, the second apparatus 120 may send (502), to a first apparatus 110, a measurement configuration at least comprising a plurality of measurement timing occasions for measurements. For example, the second apparatus 120 may send an RRC configuration message to the first apparatus 110, including measurement configuration and initial cell center configuration. The first apparatus 110 assumes the initial state as the cell center state.

In some embodiments, the first apparatus 110 may perform (506), based on a state of the first apparatus 110 being in a first region within a cell (i.e. serving cell 102) serving the first apparatus 110, the measurements by using some of the measurement timing occasions with a first periodicity. For example, the first apparatus 110 may perform measurements with a longer periodicity, which may be referred to as a first periodicity.

During the plurality of measurement timing occasions for measurements, e.g., SMTCs, the second apparatus 120 may verify (509) whether the first apparatus 110 is available during one or more SMTC occasions.

In some embodiments, the second apparatus 120 may attempts to schedule (508) the first apparatus 110 for data transmission in a first SMTC occasion. If the second apparatus 120 does not receive any response for this scheduling, the second apparatus 120 may determine that the first apparatus is not available in the first SMTC occasion. For example, if the first apparatus 110 is performing measurement during the first SMTC occasion, it cannot transmit/receive data. That is, the second apparatus 120 may identify that the first apparatus 110 is not available in the first SMTC occasion.

The second apparatus 120 may further attempt to schedule (510) the first apparatus 110 for data transmission in a second SMTC occasion subsequent to the first SMTC occasion. For example, the scheduling information may be transmitted to the first apparatus 110 via a downlink control information (e.g., PDCCH or DCI) or on symbols with scheduling restrictions and the scheduled data may be transmitted (512) from the second apparatus 120 to the first apparatus 110.

In some embodiments, if the first apparatus 110 monitors the scheduling information, the first apparatus 110 may transmit (514), to the second apparatus 120, a response associated with a reception of a data transmission associated with the scheduling information. The response may comprise ACK and NACK for the data sent by the second apparatus 120.

If the first apparatus 110 responds with ACK, the second apparatus 120 may verify that the first apparatus 110 is available during this SMTC occasion. If the first apparatus 110 responds with NACK, and the physical downlink control channel (PDCCH) scheduling PDSCH was sent in one of the symbols with scheduling restrictions, the network can also verify that the first apparatus 110 is available during this SMTC occasion.

As long as the first apparatus 110 is available, the first apparatus 110 may monitor (515) the data scheduling from the second apparatus 120 during the measurement timing occasion, within which the first apparatus 110 does not perform the measurements. That is, the measurement timing occasion is ignored for performing the measurements based on the first periodicity (which corresponds to cell center status).

The first apparatus 110 may continue to perform (516) measurements with a longer SMTC periodicity, if the second apparatus 120 schedules further data transmissions during the measurement timing occasions within which the first apparatus 110 is performing the measurements, the second apparatus 120 may not receive any response.

Specifically, the second apparatus 120 may attempt scheduling the first apparatus 110 during that SMTC occasion, by sending PDCCH with DCI, as in action 508, but it receives no ACK/NACK. The lack of hybrid automatic repeat request (HARQ) feedback is interpreted by the second apparatus 120 as meaning that the first apparatus 110 is not available during this SMTC occasion.

Additionally or alternatively, the first apparatus 110 may detect (520) that it has moved to the cell edge. The first apparatus 110 may change (522) the periodicity in which it is collecting measurements to a cell edge configuration, with a second periodicity, which is shorter than the first periodicity. The first apparatus 110 may perform (524) measurements with the second periodicity.

During the plurality of measurement timing occasions for measurements, e.g., SMTCs, the second apparatus 120 may verify (531) whether the first apparatus 110 is available during one or more SMTC occasions.

Similarly to the previous steps, the second apparatus 120 may attempt to schedule (526) the first apparatus 110 for data transmission in a SMTC occasion according to configured SMTC periodicity. However, the first apparatus 110 may perform (524) measurements in this SMTC occasion. The second apparatus 120 may not receive any response for this scheduling and therefore determines that the first apparatus 110 is not available.

The second apparatus 120 may further attempt to schedule (530) the first apparatus 110 for data transmission in a SMTC occasion according to configured SMTC periodicity. However, the first apparatus 110 may perform (528) measurements in this SMTC occasion because the periodicity becomes shorter. The second apparatus 120 may not receive any response for this scheduling and therefore determines that the first apparatus 110 is not available.

That is, based on multiple attempts of scheduling in some SMTC occasions, the second apparatus 120 may verify, based on availability and/or unavailability, how often the first apparatus 110 is available for scheduling during the SMTC occasions. Then the second apparatus 120 may identify a pattern and use this pattern to schedule data to the first apparatus 110.

After the first apparatus 110 detects (532) that it is in cell center, it repeats the cycle, by changing the configuration to longer SMTC periodicity in action 506.

Based on this solution, as the UE can be measuring less frequently, the measurement occasions can be used for data traffic, i.e., the present disclosure reduces scheduling restrictions towards devices closer to cell center due to measurements. Measuring with less frequency by applying multi-Rx continuously on the UE may facilitate mitigation of the increased UE power consumption impact from this, it is possible to keep the existing mobility robustness while decreasing negative impact from performing measurements.

In addition, a UE can save power during discontinuous reception (DRX) as measurements are less frequent. The present disclosure is indifferent to whether measurements are inter- or intra-frequency measurements. The suggested division of cells into regions shall only be applied where it fits. For very small, limited coverage cells, the idea should not be applied as handovers could potentially be very frequent. For larger cells, the device can have fewer scheduling restrictions and thereby experience a higher throughput.

Furthermore, there will be event triggered measurement reports used to change measurement schedule at UE side, not only for reporting towards network. The UE will be able to switch measurement setup based on region in the cell. The network will adjust scheduling restrictions towards UE depending which region they are in, individually.

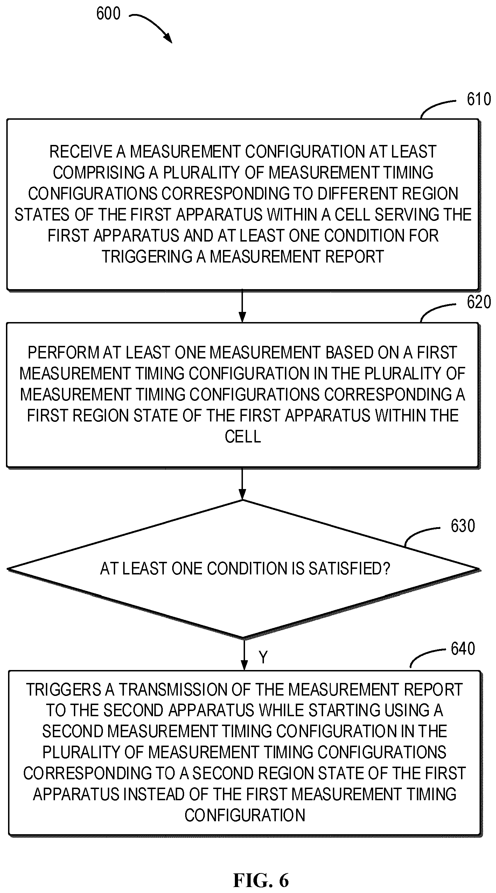

FIG. 6 shows a flowchart of an example method 600 implemented at a first apparatus in accordance with some example embodiments of the present disclosure. For the purpose of discussion, the method 600 will be described from the perspective of the first apparatus 110 in FIG. 1.

At block 610, the first apparatus receives, from a second apparatus, a measurement configuration at least comprising a plurality of measurement timing configurations corresponding to different region states of the first apparatus within a cell serving the first apparatus and at least one condition for triggering a measurement report.

At block 620, the first apparatus performs at least one measurement based on a first measurement timing configuration in the plurality of measurement timing configurations corresponding a first region state of the first apparatus within the cell.

At block 630, in accordance with a determination, based on the at least one measurement, that at least one condition is satisfied, at block 640, the first apparatus triggers a transmission of the measurement report to the second apparatus while starting using a second measurement timing configuration in the plurality of measurement timing configurations corresponding to a second region state of the first apparatus instead of the first measurement timing configuration.

In some example embodiments, the first region state of the first apparatus is a default initial region state, which is configured by the second apparatus or pre-configured or indicated in the measurement configuration.

In some example embodiments, the at least one condition is associated with one or more region states of the first apparatus within the cell.

In some example embodiments, a first periodicity associated with the first measurement timing configuration is larger than a second periodicity associated with the second measurement timing configuration if the first region state of the first apparatus is nearer to a center of the cell comparing to the second region state.

In some example embodiments, the measurement configuration comprises offsets corresponding to the plurality of measurement timing configurations.

In some example embodiments, the method 600 further comprises: in accordance with a determination that an event is detected based on the at least one measurement, determining the condition is satisfied; and determining, based on the satisfying of the condition, that the second measurement timing configuration corresponding to the second region state of the first apparatus is to be used by the first apparatus instead of the first measurement timing configuration.

In some example embodiments, the method 600 further comprises: in accordance with a determination that an event is detected based on the at least one measurement, determining a first condition in the two or more conditions is satisfied; determining, based on the satisfying of the first condition, that the second measurement timing configuration corresponding to the second region state of the first apparatus is to be used by the first apparatus instead of the first measurement timing configuration; in accordance with a determination that a further event is detected based on at least one further measurement, determining a second condition in the two or more conditions is satisfied; and determining, based on the satisfying of the second condition, that the first measurement timing configuration corresponding to the first region state of the first apparatus or a third measurement timing configuration corresponding to a third region state of the first apparatus is to be used by the first apparatus instead of the second measurement timing configuration.

In some example embodiments, the method 600 further comprises: obtaining an indication of whether a fast beam sweeping is enabled corresponding to the plurality of measurement timing configurations; and in accordance with a determination, performing on the indication, that the fast beam sweeping is enabled under the use of the first measurement timing configuration, perform the fast beam sweeping for the at least one measurement.

In some example embodiments, if fast beam sweeping is disabled, a third measurement timing configuration is used to perform measurements.

In some example embodiments, the method 600 further comprises: in accordance with a determination that an event is detected based on the at least one measurement, determining the condition is satisfied; and determining, based on the satisfying of the condition, that the second measurement timing configuration corresponding to the second region state of the first apparatus is to be used by the first apparatus instead of the first measurement timing configuration.

In some example embodiments, the method 600 further comprises: in accordance with a determination that fast beam sweeping is enabled and that an event is detected based on the at least one measurement, determining a first condition in the two or more conditions is satisfied; determining, based on the satisfying of the first condition, that the second measurement timing configuration corresponding to the second region state of the first apparatus is to be used by the first apparatus instead of the first measurement timing configuration; in accordance with a determination that fast beam sweeping is enabled and that a further event is detected based on at least one further measurement, determining a second condition in the two or more conditions is satisfied; and determining, based on the satisfying of the second condition, that the first measurement timing configuration corresponding to the first region state of the first apparatus or a third measurement timing configuration corresponding to a third region state of the first apparatus is to be used by the first apparatus instead of the second measurement timing configuration.

In some example embodiments, a detection of the event and/or the further event is associated with at least one of the following: a mobility event, a RSRP threshold, location information that is known to the first apparatus and/or the second apparatus, mobility status of the first apparatus, or status of data buffer on the first apparatus or the second apparatus.

In some example embodiments, the first apparatus comprises a terminal device and the second apparatus comprises a network device.

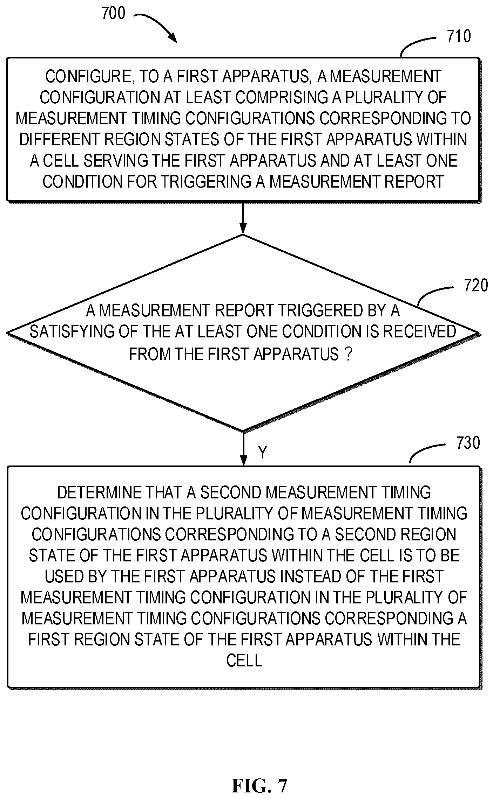

FIG. 7 shows a flowchart of an example method 700 implemented at a second apparatus in accordance with some example embodiments of the present disclosure. For the purpose of discussion, the method 700 will be described from the perspective of the second apparatus 120 in FIG. 1.

At block 710, the second apparatus configures, to a first apparatus, a measurement configuration at least comprising a plurality of measurement timing configurations corresponding to different region states of the first apparatus within a cell serving the first apparatus and at least one condition for triggering a measurement report.

At block 720, in accordance with a determination that a measurement report triggered by a satisfying of the at least one condition is received from the first apparatus, at block 730, the second apparatus determines that a second measurement timing configuration in the plurality of measurement timing configurations corresponding to a second region state of the first apparatus within the cell is to be used by the first apparatus instead of the first measurement timing configuration in the plurality of measurement timing configurations corresponding a first region state of the first apparatus within the cell.

In some example embodiments, the method 700 further comprises: indicating, to the first apparatus, that the first region state is used as a default initial region state of the first apparatus.

In some example embodiments, the at least one condition is associated with one or more region states of the first apparatus within the cell.

In some example embodiments, a first periodicity associated with the first measurement timing configuration is larger than a second periodicity associated with the second measurement timing configuration if the first region state of the first apparatus is nearer to a center of the cell comparing to the second region state.

In some example embodiments, the measurement configuration comprises offsets corresponding to the plurality of measurement timing configurations.

In some example embodiments, the method 700 further comprises: in accordance with a determination that the measurement report triggered by the satisfying of a first condition is received from the first apparatus, determining that the second measurement timing configuration is to be used by the first apparatus instead of the first measurement timing configuration; and in accordance with a determination that a further measurement report triggered by the satisfying of a second condition is received from the first apparatus, determining that the first measurement timing configuration or a third measurement timing configuration is to be used by the first apparatus instead of the second measurement timing configuration.

In some example embodiments, the method 700 further comprises: transmitting, to first apparatus in the measurement configuration, an indication of whether a fast beam sweeping is enabled corresponding to the plurality of measurement timing configurations.

In some example embodiments, the first apparatus comprises a terminal device and the second apparatus comprises a network device.

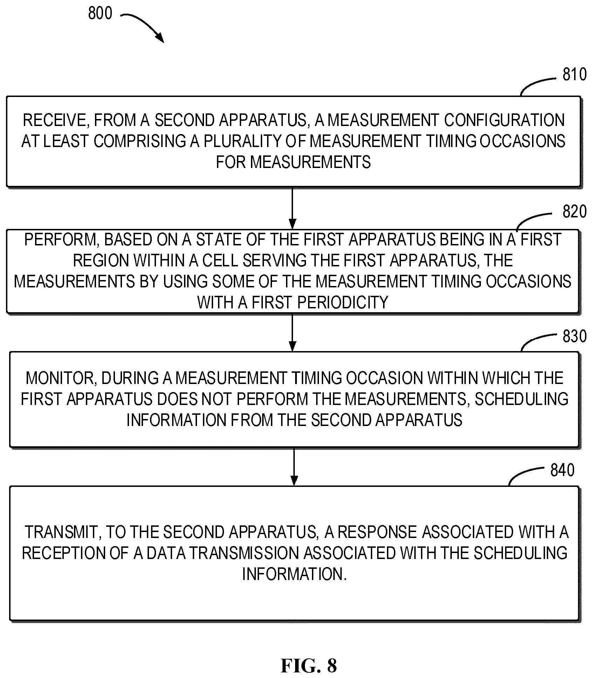

FIG. 8 shows a flowchart of an example method 800 implemented at a first apparatus in accordance with some example embodiments of the present disclosure. For the purpose of discussion, the method 800 will be described from the perspective of the first apparatus 110 in FIG. 1.

At block 810, the first apparatus receives, from a second apparatus, a measurement configuration at least comprising a plurality of measurement timing occasions for measurements.

At block 820, the first apparatus performs, based on a state of the first apparatus being in a first region within a cell serving the first apparatus, the measurements by using some of the measurement timing occasions with a first periodicity.

At block 830, the first apparatus monitors, during a measurement timing occasion within which the first apparatus does not perform the measurements, scheduling information from the second apparatus.

At block 840, the first apparatus transmits, to the second apparatus, a response associated with a reception of a data transmission associated with the scheduling information.

In some example embodiments, the method 800 further comprises: monitoring the data scheduling from the second apparatus during the measurement timing occasion, within which the first apparatus does not perform the measurements, via downlink control information or symbols with scheduling restrictions on a downlink control channel.

In some example embodiments, the measurement timing occasion is ignored for performing the measurements based on the first periodicity.

In some example embodiments, the method 800 further comprises: in accordance with a determination that the state of the first apparatus is detected as being in the second region, performing the measurements by using at least some of the measurement timing occasions with a second periodicity shorter than the first periodicity.

In some example embodiments, the first apparatus comprises a terminal device and the second apparatus comprises a network device.

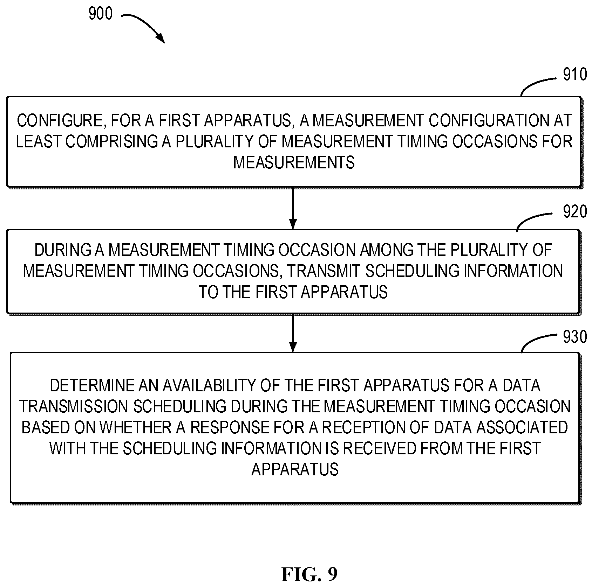

FIG. 9 shows a flowchart of an example method 900 implemented at a second apparatus in accordance with some example embodiments of the present disclosure. For the purpose of discussion, the method 900 will be described from the perspective of the second apparatus 120 in FIG. 1.

At block 910, the second apparatus configures, for a first apparatus, a measurement configuration at least comprising a plurality of measurement timing occasions for measurements.

At block 920, the second apparatus, during a measurement timing occasion among the plurality of measurement timing occasions, transmit scheduling information to the first apparatus.

At block 930, the second apparatus determines an availability of the first apparatus for a data transmission scheduling during the measurement timing occasion based on whether a response for a reception of data associated with the scheduling information is received from the first apparatus.

In some example embodiments, the method 900 further comprises: in accordance with a determination that no response is received, determining the measurement timing occasion is not available for the first apparatus for the data transmission scheduling.

In some example embodiments, the method 900 further comprises: in accordance with a determination that the response of an acknowledgment or a non-acknowledgment is received, determining the measurement timing occasion is available for the first apparatus for the data transmission scheduling.

In some example embodiments, the method 900 further comprises: transmitting the scheduling information to the first apparatus during the measurement timing occasion or symbols with scheduling restrictions via downlink control information on a downlink control channel.

In some example embodiments, the method 900 further comprises: scheduling the first apparatus for a further data transmission during at least one other measurement timing occasion in the plurality of measurement timing occasions; and determining, based on the scheduling, another availability of the first apparatus for the data transmission scheduling during the at least one other measurement timing occasion; and determining, at least based on the availability and the another availability, a pattern for the data transmission scheduling between the first and the second apparatuses.

In some example embodiments, the first apparatus comprises a terminal device and the second apparatus comprises a network device.

In some example embodiments, a first apparatus capable of performing any of the method 600 (for example, the first apparatus 110 in FIG. 1) may comprise means for performing the respective operations of the method 600. The means may be implemented in any suitable form. For example, the means may be implemented in a circuitry or software module. The first apparatus may be implemented as or included in the first apparatus 110 in FIG. 1.

In some example embodiments, the first apparatus comprises means for receiving, from a second apparatus, a measurement configuration at least comprising a plurality of measurement timing configurations corresponding to different region states of the first apparatus within a cell serving the first apparatus and at least one condition for triggering a measurement report; means for performing at least one measurement based on a first measurement timing configuration in the plurality of measurement timing configurations corresponding a first region state of the first apparatus within the cell; and means for in accordance with a determination, based on the at least one measurement, that at least one condition is satisfied, trigger a transmission of the measurement report to the second apparatus while starting using a second measurement timing configuration in the plurality of measurement timing configurations corresponding to a second region state of the first apparatus instead of the first measurement timing configuration.

In some example embodiments, the first region state of the first apparatus is a default initial region state, which is configured by the second apparatus or pre-configured or indicated in the measurement configuration.

In some example embodiments, the at least one condition is associated with one or more region states of the first apparatus within the cell.

In some example embodiments, a first periodicity associated with the first measurement timing configuration is larger than a second periodicity associated with the second measurement timing configuration if the first region state of the first apparatus is nearer to a center of the cell comparing to the second region state.

In some example embodiments, the measurement configuration comprises offsets corresponding to the plurality of measurement timing configurations.

In some example embodiments, the first apparatus further comprises: means for in accordance with a determination that an event is detected based on the at least one measurement, determining the condition is satisfied; and means for determining, based on the satisfying of the condition, that the second measurement timing configuration corresponding to the second region state of the first apparatus is to be used by the first apparatus instead of the first measurement timing configuration.

In some example embodiments, the first apparatus further comprises: means for in accordance with a determination that an event is detected based on the at least one measurement, determining a first condition in the two or more conditions is satisfied; means for determining, based on the satisfying of the first condition, that the second measurement timing configuration corresponding to the second region state of the first apparatus is to be used by the first apparatus instead of the first measurement timing configuration; means for in accordance with a determination that a further event is detected based on at least one further measurement, determining a second condition in the two or more conditions is satisfied; and means for determining, based on the satisfying of the second condition, that the first measurement timing configuration corresponding to the first region state of the first apparatus or a third measurement timing configuration corresponding to a third region state of the first apparatus is to be used by the first apparatus instead of the second measurement timing configuration.

In some example embodiments, the first apparatus further comprises: means for obtaining an indication of whether a fast beam sweeping is enabled corresponding to the plurality of measurement timing configurations; and means for in accordance with a determination, performing on the indication, that the fast beam sweeping is enabled under the use of the first measurement timing configuration, perform the fast beam sweeping for the at least one measurement.

In some example embodiments, if fast beam sweeping is disabled, a third measurement timing configuration is used to perform measurements.

In some example embodiments, the first apparatus further comprises: means for in accordance with a determination that an event is detected based on the at least one measurement, determining the condition is satisfied; and means for determining, based on the satisfying of the condition, that the second measurement timing configuration corresponding to the second region state of the first apparatus is to be used by the first apparatus instead of the first measurement timing configuration.

In some example embodiments, the first apparatus further comprises: means for in accordance with a determination that fast beam sweeping is enabled and that an event is detected based on the at least one measurement, determining a first condition in the two or more conditions is satisfied; means for determining, based on the satisfying of the first condition, that the second measurement timing configuration corresponding to the second region state of the first apparatus is to be used by the first apparatus instead of the first measurement timing configuration; means for in accordance with a determination that fast beam sweeping is enabled and that a further event is detected based on at least one further measurement, determining a second condition in the two or more conditions is satisfied; and means for determining, based on the satisfying of the second condition, that the first measurement timing configuration corresponding to the first region state of the first apparatus or a third measurement timing configuration corresponding to a third region state of the first apparatus is to be used by the first apparatus instead of the second measurement timing configuration.

In some example embodiments, a detection of the event and/or the further event is associated with at least one of the following: a mobility event, a RSRP threshold, location information that is known to the first apparatus and/or the second apparatus, mobility status of the first apparatus, or status of data buffer on the first apparatus or the second apparatus.

In some example embodiments, the first apparatus comprises a terminal device and the second apparatus comprises a network device.

In some example embodiments, a second apparatus capable of performing any of the method 700 (for example, the second apparatus 120 in FIG. 1) may comprise means for performing the respective operations of the method 700. The means may be implemented in any suitable form. For example, the means may be implemented in a circuitry or software module. The second apparatus may be implemented as or included in the second apparatus 120 in FIG. 1.

In some example embodiments, the second apparatus comprises means for configuring, to a first apparatus, a measurement configuration at least comprising a plurality of measurement timing configurations corresponding to different region states of the first apparatus within a cell serving the first apparatus and at least one condition for triggering a measurement report; and means for in accordance with a determination that a measurement report triggered by a satisfying of the at least one condition is received from the first apparatus, determining that a second measurement timing configuration in the plurality of measurement timing configurations corresponding to a second region state of the first apparatus within the cell is to be used by the first apparatus instead of the first measurement timing configuration in the plurality of measurement timing configurations corresponding a first region state of the first apparatus within the cell.

In some example embodiments, the second apparatus further comprises: means for indicating, to the first apparatus, that the first region state is used as a default initial region state of the first apparatus.

In some example embodiments, the at least one condition is associated with one or more region states of the first apparatus within the cell.

In some example embodiments, a first periodicity associated with the first measurement timing configuration is larger than a second periodicity associated with the second measurement timing configuration if the first region state of the first apparatus is nearer to a center of the cell comparing to the second region state.

In some example embodiments, the measurement configuration comprises offsets corresponding to the plurality of measurement timing configurations.

In some example embodiments, the second apparatus further comprises: means for in accordance with a determination that the measurement report triggered by the satisfying of a first condition is received from the first apparatus, determining that the second measurement timing configuration is to be used by the first apparatus instead of the first measurement timing configuration; and means for in accordance with a determination that a further measurement report triggered by the satisfying of a second condition is received from the first apparatus, determining that the first measurement timing configuration or a third measurement timing configuration is to be used by the first apparatus instead of the second measurement timing configuration.

In some example embodiments, the second apparatus further comprises: means for transmitting, to first apparatus in the measurement configuration, an indication of whether a fast beam sweeping is enabled corresponding to the plurality of measurement timing configurations.

In some example embodiments, the first apparatus comprises a terminal device and the second apparatus comprises a network device.

In some example embodiments, a first apparatus capable of performing any of the method 800 (for example, the first apparatus 110 in FIG. 1) may comprise means for performing the respective operations of the method 800. The means may be implemented in any suitable form. For example, the means may be implemented in a circuitry or software module. The first apparatus may be implemented as or included in the first apparatus 110 in FIG. 1.

In some example embodiments, the first apparatus comprises means for receiving, from a second apparatus, a measurement configuration at least comprising a plurality of measurement timing occasions for measurements; means for performing, based on a state of the first apparatus being in a first region within a cell serving the first apparatus, the measurements by using some of the measurement timing occasions with a first periodicity; and means for monitoring, during a measurement timing occasion within which the first apparatus does not perform the measurements, scheduling information from the second apparatus; and means for transmitting, to the second apparatus, a response associated with a reception of a data transmission associated with the scheduling information.

In some example embodiments, the first apparatus further comprises: means for monitoring the data scheduling from the second apparatus during the measurement timing occasion, within which the first apparatus does not perform the measurements, via downlink control information or symbols with scheduling restrictions on a downlink control channel.

In some example embodiments, the measurement timing occasion is ignored for performing the measurements based on the first periodicity.

In some example embodiments, the first apparatus further comprises: means for in accordance with a determination that the state of the first apparatus is detected as being in the second region, performing the measurements by using at least some of the measurement timing occasions with a second periodicity shorter than the first periodicity.

In some example embodiments, the first apparatus comprises a terminal device and the second apparatus comprises a network device.

In some example embodiments, a second apparatus capable of performing any of the method 900 (for example, the second apparatus 120 in FIG. 1) may comprise means for performing the respective operations of the method 900. The means may be implemented in any suitable form. For example, the means may be implemented in a circuitry or software module. The second apparatus may be implemented as or included in the second apparatus 120 in FIG. 1.

In some example embodiments, the second apparatus comprises means for configuring, for a first apparatus, a measurement configuration at least comprising a plurality of measurement timing occasions for measurements; means for, during a measurement timing occasion among the plurality of measurement timing occasions, transmitting scheduling information to the first apparatus; and means for determining an availability of the first apparatus for a data transmission scheduling during the measurement timing occasion based on whether a response for a reception of data associated with the scheduling information is received from the first apparatus.

In some example embodiments, the second apparatus further comprises: means for in accordance with a determination that no response is received, determining the measurement timing occasion is not available for the first apparatus for the data transmission scheduling.

In some example embodiments, the second apparatus further comprises: means for in accordance with a determination that the response of an acknowledgment or a non-acknowledgment is received, determining the measurement timing occasion is available for the first apparatus for the data transmission scheduling.

In some example embodiments, the second apparatus further comprises: means for transmitting the scheduling information to the first apparatus during the measurement timing occasion or symbols with scheduling restrictions via downlink control information on a downlink control channel.

In some example embodiments, the second apparatus further comprises: means for scheduling the first apparatus for a further data transmission during at least one other measurement timing occasion in the plurality of measurement timing occasions; and means for determining, based on the scheduling, another availability of the first apparatus for the data transmission scheduling during the at least one other measurement timing occasion; and means for determining, at least based on the availability and the another availability, a pattern for the data transmission scheduling between the first and the second apparatuses.

In some example embodiments, the first apparatus comprises a terminal device and the second apparatus comprises a network device.

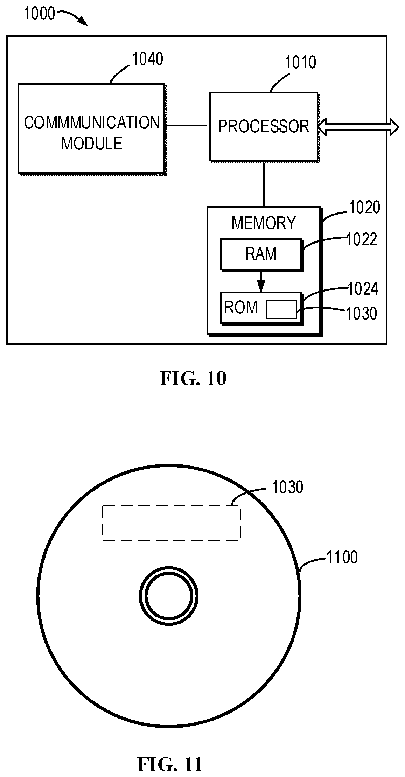

FIG. 10 is a simplified block diagram of a device 1000 that is suitable for implementing example embodiments of the present disclosure. The device 1000 may be provided to implement a communication device, for example, the first apparatus 110 or the second apparatus 110 as shown in FIG. 1. As shown, the device 1000 includes one or more processors 1010, one or more memories 1020 coupled to the processor 1010, and one or more communication modules 1040 coupled to the processor 1010.

The communication module 1040 is for bidirectional communications. The communication module 1040 has one or more communication interfaces to facilitate communication with one or more other modules or devices. The communication interfaces may represent any interface that is necessary for communication with other network elements. In some example embodiments, the communication module 1040 may include at least one antenna.

The processor 1010 may be of any type suitable to the local technical network and may include one or more of the following: general purpose computers, special purpose computers, microprocessors, digital signal processors (DSPs) and processors based on multicore processor architecture, as non-limiting examples. The device 1000 may have multiple processors, such as an application specific integrated circuit chip that is slaved in time to a clock which synchronizes the main processor.

The memory 1020 may include one or more non-volatile memories and one or more volatile memories. Examples of the non-volatile memories include, but are not limited to, a Read Only Memory (ROM) 1024, an electrically programmable read only memory (EPROM), a flash memory, a hard disk, a compact disc (CD), a digital video disk (DVD), an optical disk, a laser disk, and other magnetic storage and/or optical storage. Examples of the volatile memories include, but are not limited to, a random-access memory (RAM) 1022 and other volatile memories that will not last in the power-down duration.

A computer program 1030 includes computer executable instructions that are executed by the associated processor 1010. The instructions of the program 1030 may include instructions for performing operations/acts of some example embodiments of the present disclosure. The program 1030 may be stored in the memory, e.g., the ROM 1024. The processor 1010 may perform any suitable actions and processing by loading the program 1030 into the RAM 1022.

The example embodiments of the present disclosure may be implemented by means of the program 1030 so that the device 1000 may perform any process of the disclosure as discussed with reference to FIG. 2 to FIG. 9. The example embodiments of the present disclosure may also be implemented by hardware or by a combination of software and hardware.

In some example embodiments, the program 1030 may be tangibly contained in a computer readable medium which may be included in the device 1000 (such as in the memory 1020) or other storage devices that are accessible by the device 1000. The device 1000 may load the program 1030 from the computer readable medium to the RAM 1022 for execution. In some example embodiments, the computer readable medium may include any types of non-transitory storage medium, such as ROM, EPROM, a flash memory, a hard disk, CD, DVD, and the like. The term "non-transitory," as used herein, is a limitation of the medium itself (i.e., tangible, not a signal) as opposed to a limitation on data storage persistency (e.g., RAM vs. ROM).

FIG. 11 shows an example of the computer readable medium 1100 which may be in form of CD, DVD or other optical storage disk. The computer readable medium 1100 has the program 1030 stored thereon.

Generally, various embodiments of the present disclosure may be implemented in hardware or special purpose circuits, software, logic or any combination thereof. Some aspects may be implemented in hardware, and other aspects may be implemented in firmware or software which may be executed by a controller, microprocessor or other computing device. Although various aspects of embodiments of the present disclosure are illustrated and described as block diagrams, flowcharts, or using some other pictorial representations, it is to be understood that the block, apparatus, system, technique or method described herein may be implemented in, as non-limiting examples, hardware, software, firmware, special purpose circuits or logic, general purpose hardware or controller or other computing devices, or some combination thereof.

Some example embodiments of the present disclosure also provide at least one computer program product tangibly stored on a computer readable medium, such as a non-transitory computer readable medium. The computer program product includes computer-executable instructions, such as those included in program modules, being executed in a device on a target physical or virtual processor, to carry out any of the methods as described above. Generally, program modules include routines, programs, libraries, objects, classes, components, data structures, or the like that perform particular tasks or implement particular abstract data types. The functionality of the program modules may be combined or split between program modules as desired in various embodiments. Machine-executable instructions for program modules may be executed within a local or distributed device. In a distributed device, program modules may be located in both local and remote storage media.

Program code for carrying out methods of the present disclosure may be written in any combination of one or more programming languages. The program code may be provided to a processor or controller of a general-purpose computer, special purpose computer, or other programmable data processing apparatus, such that the program code, when executed by the processor or controller, cause the functions/operations specified in the flowcharts and/or block diagrams to be implemented. The program code may execute entirely on a machine, partly on the machine, as a stand-alone software package, partly on the machine and partly on a remote machine or entirely on the remote machine or server.

In the context of the present disclosure, the computer program code or related data may be carried by any suitable carrier to enable the device, apparatus or processor to perform various processes and operations as described above. Examples of the carrier include a signal, computer readable medium, and the like.

The computer readable medium may be a computer readable signal medium or a computer readable storage medium. A computer readable medium may include but not limited to an electronic, magnetic, optical, electromagnetic, infrared, or semiconductor system, apparatus, or device, or any suitable combination of the foregoing. More specific examples of the computer readable storage medium would include an electrical connection having one or more wires, a portable computer diskette, a hard disk, a random-access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing.

Further, although operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, although several specific implementation details are contained in the above discussions, these should not be construed as limitations on the scope of the present disclosure, but rather as descriptions of features that may be specific to particular embodiments. Unless explicitly stated, certain features that are described in the context of separate embodiments may also be implemented in combination in a single embodiment. Conversely, unless explicitly stated, various features that are described in the context of a single embodiment may also be implemented in a plurality of embodiments separately or in any suitable sub-combination.

Although the present disclosure has been described in languages specific to structural features and/or methodological acts, it is to be understood that the present disclosure defined in the appended claims is not necessarily limited to the specific features or acts described above. Rather, the specific features and acts described above are disclosed as example forms of implementing the claims.

## Claims

1. A first apparatus (110, 1000) comprising:
at least one processor (1010); and
at least one memory (1020) storing instructions that, when executed by the at least one processor, cause the first apparatus at least to:
receive, from a second apparatus (120), a measurement configuration at least comprising a plurality of measurement timing occasions for measurements;
perform, based on a state of the first apparatus being in a first region within a cell serving the first apparatus, the measurements by using some of the measurement timing occasions with a first periodicity; and
monitor, during a measurement timing occasion within which the first apparatus does not perform the measurements, scheduling information from the second apparatus; and
transmit, to the second apparatus, a response associated with a reception of a data transmission associated with the scheduling information.

2. The first apparatus of claim 1, wherein the first apparatus is caused to:
monitor the data scheduling from the second apparatus during the measurement timing occasion, within which the first apparatus does not perform the measurements, via downlink control information or symbols with scheduling restrictions on a downlink control channel.

3. The first apparatus of claim 1 or 2, wherein the measurement timing occasion is ignored for performing the measurements based on the first periodicity.

4. The first apparatus of any of claims 1-3, wherein the first region of the first apparatus is nearer to a center of the cell comparing to a second region, and wherein the first apparatus is caused to:
in accordance with a determination that the state of the first apparatus is detected as being in the second region, perform the measurements by using at least some of the measurement timing occasions with a second periodicity shorter than the first periodicity.

5. The first apparatus of any of claims 1-4, wherein the first apparatus comprises a terminal device and the second apparatus comprises a network device.

6. A second apparatus (120, 1000) comprising:
at least one processor (1010); and
at least one memory (1020) storing instructions that, when executed by the at least one processor, cause the second apparatus at least to:
configure, for a first apparatus (110), a measurement configuration at least comprising a plurality of measurement timing occasions for measurements;
transmit, during a measurement timing occasion among the plurality of measurement timing occasions, scheduling information to the first apparatus; and
determine an availability of the first apparatus for a data transmission scheduling during the measurement timing occasion based on whether a response for a reception of data associated with the scheduling information is received from the first apparatus.

7. The second apparatus of claim 6, wherein the second apparatus is caused to:
in accordance with a determination that no response is received, determine the measurement timing occasion is not available for the first apparatus for the data transmission scheduling.

8. The second apparatus of claim 6, wherein the second apparatus is caused to:
in accordance with a determination that the response of an acknowledgment or a non-acknowledgment is received, determine the measurement timing occasion is available for the first apparatus for the data transmission scheduling.

9. The second apparatus of any of claims 6-8, wherein second apparatus is caused to:
transmit the scheduling information to the first apparatus during the measurement timing occasion or symbols with scheduling restrictions via downlink control information on a downlink control channel.

10. The second apparatus of any of claims 6-9, wherein second apparatus is caused to:
schedule the first apparatus for a further data transmission during at least one other measurement timing occasion in the plurality of measurement timing occasions; and
determine, based on the scheduling, another availability of the first apparatus for the data transmission scheduling during the at least one other measurement timing occasion; and
determine, at least based on the availability and the another availability, a pattern for the data transmission scheduling between the first and the second apparatuses.

11. The second apparatus of any of claims 6-10, wherein the first apparatus comprises a terminal device and the second apparatus comprises a network device.

12. A method comprising:
receiving, by a first apparatus from a second apparatus, a measurement configuration at least comprising a plurality of measurement timing occasions for measurements;
performing, based on a state of the first apparatus being in a first region within a cell serving the first apparatus, the measurements by using some of the measurement timing occasions with a first periodicity;
monitoring, during a measurement timing occasion within which the first apparatus does not perform the measurements, scheduling information from the second apparatus; and
transmitting, to the second apparatus, a response associated with a reception of a data transmission associated with the scheduling information.

13. A method according to claim 12, said method further comprising:
monitoring the data scheduling from the second apparatus during the measurement timing occasion, within which the first apparatus does not perform the measurements, via downlink control information or symbols with scheduling restrictions on a downlink control channel.

14. A method comprising:
configuring, by a second apparatus for a first apparatus, a measurement configuration at least comprising a plurality of measurement timing occasions for measurements;
during a measurement timing occasion among the plurality of measurement timing occasions, transmitting scheduling information to the first apparatus; and
determining an availability of the first apparatus for a data transmission scheduling during the measurement timing occasion based on whether a response for a reception of data associated with the scheduling information is received from the first apparatus.

15. A computer readable medium comprising instructions stored thereon for causing an apparatus at least to perform the method of claim 12 or 13 or the method of claim 14.
